# EUROPEAN PATENT APPLICATION

(11) **EP 2 515 288 A1**
(43) Date of publication of application: **24.10.2012**
(21) Application number: 10837262.4
(22) Date of filing: 13.12.2010
(51) Int. Cl.: G09G 3/288, G09G 3/00, H04N 13/04

(54) **PLASMA DISPLAY DEVICE, PLASMA DISPLAY SYSTEM, AND METHOD OF CONTROLLING SHUTTER GLASS FOR PLASMA DISPLAY DEVICE**

(30) Priority: 14.12.2009 JP 2009282503
(71) Applicant: Panasonic Corporation, Kadoma-shi Osaka 571-8501 (JP)
(72) Inventor: SHIOZAKI, Yuya, Osaka-shi, Osaka 540 - 6207 (JP); ORIGUCHI, Takahiko, Osaka-shi, Osaka 540 - 6207 (JP); SHOJI, Hidehiko, Osaka-shi, Osaka 540 - 6207 (JP); ISHIZUKA, Mitsuhiro, Osaka-shi, Osaka 540 - 6207 (JP); KIGO, Shigeo, Osaka-shi, Osaka 540 - 6207 (JP)
(74) Representative: Vigand, Philippe
(86) International application number: PCT/JP2010/007212
(87) International publication number: WO 2011/074228

(57) **Abstract**

In a plasma display apparatus capable of displaying an image for stereoscopic view, the image display quality is enhanced. For this purpose, the plasma display apparatus includes a driver circuit and a timing generation circuit. The driver circuit drives the plasma display panel in a manner such that a field for the right eye and a field for the left eye are alternately repeated, each field is formed of an all-cell initializing subfield and a selective initializing subfield, and the top subfield of each field is the all-cell initializing subfield. The timing generation circuit generates shutter opening/closing timing signals. The timing generation circuit generates the shutter opening/closing timing signals such that both timing signal for opening/closing the right eye shutter and timing signal for opening/closing the left eye shutter are set to OFF in the all-cell initializing period of the fields for the right eye and for the left eye.

## Description

### TECHNICAL FIELD

The present invention relates to a plasma display apparatus, a plasma display system, and a control method for a pair of shutter glasses for the plasma display apparatus that enable the user to stereoscopically view a stereoscopic image made of an image for the right eye and an image for the left eye alternately displayed on the plasma display panel, using the pair of shutter glasses.

### BACKGROUND ART

An AC surface discharge panel, i.e. a typical plasma display panel (hereinafter, simply referred to as "panel"), has a front substrate and a rear substrate opposed to each other. A plurality of display electrode pairs, each including a scan electrode and a sustain electrode, is formed on the front substrate. A plurality of data electrodes is formed on the rear substrate. A large number of discharge cells are formed between the substrates. Ultraviolet rays are generated by gas discharge in the discharge cells. The ultraviolet rays excite phosphors of red color, green color, and blue color such that light is emitted for the display of a color image.

A typically used driving method for the panel is a subfield method. In the subfield method, gradations are displayed by dividing one field into a plurality of subfields and causing light emission or no light emission in each discharge cell in each subfield. Each of the subfields has an initializing period, an address period, and a sustain period.

In the initializing period, an initializing operation is performed so as to cause an initializing discharge in the discharge cells and form wall charge necessary for the subsequent address operation. In the address period, an address operation is performed so as to cause an address discharge selectively in the discharge cells in response to an image to be displayed and form wall charge in the discharge cells. In the sustain period, a sustain operation is performed so as to alternately apply sustain pulses in number predetermined for each subfield to the scan electrodes and the sustain electrodes and cause a sustain discharge in the discharge cells. Then, the phosphor layers in the discharge cells having undergone the address operation emit light, and the discharge cells are lit at luminances corresponding to the gradation values of image signals. Thus, an image is displayed in the image display area of the panel.

One of the important factors in enhancing the image display quality in a panel is to enhance the contrast. One of the subfield methods discloses a driving method for enhancing the contrast ratio by minimizing the light emission unrelated to gradation display.

In this driving method, in the initializing period of one of a plurality of subfields forming one field, an initializing operation is performed so as to cause an initializing discharge in all the discharge cells. In the initializing periods of the other subfields, an initializing operation is performed so as to cause an initializing discharge selectively in the discharge cells having undergone a sustain discharge in the immediately preceding sustain period.

The luminance of a black display area where no sustain discharge occurs (hereinafter, simply referred to as "luminance of black level") is changed by the light emission unrelated to image display. Such light emissions unrelated to image display include a light emission caused by an initializing discharge. However, in the above driving method, the light emission in the black display area is only the weak light emission caused when the initializing operation is performed in all the discharge cells. This operation allows the display of an image of high contrast by reducing the luminance of black level (see Patent Literature 1, for example).

Another disclosed technique enhances the visibility of black by reducing the luminance of black level in the following manner (see Patent Literature 2, for example). In the initializing period, the following initializing waveform is applied to the discharge cells having undergone a discharge in the sustain period. The initializing waveform includes a rising part that has a gradually increasing gentle ramp portion, and a falling part that has a gradually decreasing gentle ramp portion. Further, immediately before any initializing period in one field, a period where a weak discharge is caused between the sustain electrodes and scan electrodes in all the discharge cells is provided.

As described above, the technique disclosed in Patent Literature 1, for example, can reduce the luminance of black level of the display image and enhance the contrast by causing the initializing operation in all the discharge cells only once in one field in comparison with the case where the initializing discharge is caused in all the discharge cells in every subfield.

However, with recent increases in the size and definition of the panel, further enhancement of the image display quality is requested.

Recently, application of a plasma display apparatus as a three-dimensional (hereinafter, "3D") image display apparatus has been considered. In this plasma display apparatus, an image for the right eye and an image for the left eye that form an image for stereoscopic view (3D image) are alternately displayed on the panel. The user views the image using a pair of special glasses, called shutter glasses.

A pair of shutter glasses includes a shutter for the right eye and a shutter for the left eye. In the period during which an image for the right eye is displayed on the panel, the right eye shutter is opened (in a state of transmitting visible light) and the left eye shutter is closed (in a state of blocking visible light). In the period during which an image for the left eye is displayed, the left eye shutter is opened and the right eye shutter is closed. This operation enables the user to view the image for the right eye only with the right eye, and the image for the left eye only with the left eye. Thus, the user can stereoscopically view the display image.

Also in the plasma display apparatus as such a 3D image display apparatus, high image display quality is requested.

### Citation List

### Patent Literature

PTL1
   Japanese Patent Unexamined Publication No. 2000-242224
PTL2
   Japanese Patent Unexamined Publication No. 2004-37883

### SUMMARY OF THE INVENTION

A plasma display apparatus of the present invention includes a panel, a driver circuit, and a timing generation circuit. The panel has a plurality of discharge cells, each of the discharge cells has a display electrode pair formed of a scan electrode and a sustain electrode. The driver circuit displays an image on the panel in a manner such that a field for the right eye where the panel is driven based on an image signal for the right eye and a field for the left eye where the panel is driven based on an image signal for the left eye are alternately repeated. The driver circuit drives the panel in a manner such that each of the field for the right eye and the field for the left eye is formed of an all-cell initializing subfield and a selective initializing subfield, and the top subfield of each field is the all-cell initializing subfield. The all-cell initializing subfield has an all-cell initializing period where an all-cell initializing operation for causing an initializing discharge in the discharge cells is performed, an address period, and a sustain period The selective initializing subfield has a selective initializing period where a selective initializing operation for causing the initializing discharge only in the discharge cells having undergone a sustain discharge in the sustain period of the immediately preceding subfield is performed, the address period, and the sustain period. The timing generation circuit generates a timing signal for controlling the driver circuit, and shutter opening/closing timing signals. The shutter opening/closing timing signals include a timing signal for opening/closing a right eye shutter that is set to ON in response to the field for the right eye and to OFF in response to the field for the left eye, and a timing signal for opening/closing a left eye shutter that is set to ON in response to the field for the left eye and to OFF in response to the field for the right eye. Further, the timing generation circuit generates the shutter opening/closing timing signals such that both of the timing signal for opening/closing the right eye shutter and the timing signal for opening/closing the left eye shutter are set to OFF in the all-cell initializing period of the field for the right eye and in the all-cell initializing period of the field for the left eye.

This configuration enables a plasma display apparatus usable as a 3D image display apparatus to enhance the contrast by reducing the luminance of black level of the display image and thereby to enhance the image display quality.

A plasma display system of the present invention includes a plasma display apparatus including a panel, a driver circuit, and a timing generation circuit; and a pair of shutter glasses. The panel has a plurality of discharge cells, each of the discharge cells has a display electrode pair formed of a scan electrode and a sustain electrode. The driver circuit displays an image on the panel in a manner such that a field for the right eye where the panel is driven based on an image signal for the right eye and a field for the left eye where the panel is driven based on an image signal for the left eye are alternately repeated. The driver circuit drives the panel in a manner such that each of the field for the right eye and the field for the left eye is formed of an all-cell initializing subfield and a selective initializing subfield, and the top subfield of each field is the all-cell initializing subfield. The all-cell initializing subfield has an all-cell initializing period where an all-cell initializing operation for causing an initializing discharge in the discharge cells is performed, an address period, and a sustain period. The selective initializing subfield has a selective initializing period where a selective initializing operation for causing the initializing discharge only in the discharge cells having undergone a sustain discharge in the sustain period of the immediately preceding subfield is preformed, the address period, and the sustain period. The timing generation circuit generates a timing signal for controlling the driver circuit, and shutter opening/closing timing signals. The shutter opening/closing timing signals include a timing signal for opening/closing a right eye shutter that is set to ON in response to the field for the right eye and to OFF in response to the field for the left eye, and a timing signal for opening/closing a left eye shutter that is set to ON in response to the field for the left eye and to OFF in response to the field for the right eye. The pair of shutter glasses is controlled by the shutter opening/closing timing signals generated in the timing generation circuit, and includes the right eye shutter and the left eye shutter. The right eye shutter transmits visible light when the timing signal for opening/closing the right eye shutter is set to ON and blocks visible light when the timing signal is set to OFF. The left eye shutter transmits visible light when the timing signal for opening/closing the left eye shutter is set to ON and blocks visible light when the timing signal is set to OFF. Further, the timing generation circuit generates the shutter opening/closing timing signals such that both of the right eye shutter and the left eye shutter are made into a state of blocking visible light in the all-cell initializing period of the field for the right eye and in the all-cell initializing period of the field for the left eye.

This configuration enables a plasma display system that includes a plasma display apparatus usable as a 3D image display apparatus to enhance the contrast by reducing the luminance of black level of the display image and thereby to enhance the image display quality.

A control method for a pair of shutter glasses for a plasma display apparatus of the present invention is a control method for the pair of shutter glasses to be used to view an image displayed on the plasma display apparatus that includes a panel, a driver circuit, and a timing generation circuit. The panel has a plurality of discharge cells, each of the discharge cells has a display electrode pair formed of a scan electrode and a sustain electrode. The driver circuit displays an image on the panel in a manner such that a field for the right eye where the panel is driven based on an image signal for the right eye and a field for the left eye where the panel is driven based on an image signal for the left eye are alternately repeated. The driver circuit drives the panel in a manner such that each of the field for the right eye and the field for the left eye is formed of an all-cell initializing subfield and a selective initializing subfield, and the top subfield of each field is the all-cell initializing subfield. The all-cell initializing subfield has an all-cell initializing period where all-cell initializing operation for causing an initializing discharge in the discharge cells is performed, an address period, and a sustain period. The selective initializing subfield has a selective initializing period where a selective initializing operation for causing the initializing discharge only in the discharge cells having undergone a sustain discharge in the sustain period of the immediately preceding subfield is performed, the address period, and the sustain period. The timing generation circuit generates a timing signal for controlling the driver circuit, and shutter opening/closing timing signals. The shutter opening/closing timing signals include a timing signal for opening/closing a right eye shutter that is set to ON in response to the field for the right eye and to OFF in response to the field for the left eye, and a timing signal for opening/closing a left eye shutter that is set to ON in response to the field for the left eye and to OFF in response to the field for the right eye. The pair of shutter glasses has the right eye shutter and the left eye shutter that can be opened and closed independently. In the all-cell initializing period of the field for the right eye and in the all-cell initializing period of the field for the left eye, both of the right eye shutter and the left eye shutter are made in a state of blocking visible light.

The use of a pair of shutter glasses to be controlled by this control method enables a plasma display apparatus usable as a 3D image display apparatus to enhance the contrast by reducing the luminance of black level of an image for stereoscopic view displayed on the panel, and thereby enables the user to perceive the image with high image display quality.

### BRIEF DESCRIPTION OF DRAWINGS

Fig. 1 is an exploded perspective view showing a structure of a panel for use in a plasma display apparatus in accordance with an exemplary embodiment of the present invention.
Fig. 2 is an electrode array diagram of the panel for use in the plasma display apparatus in accordance with the exemplary embodiment.
Fig. 3 shows a circuit block diagram of the plasma display apparatus and a diagram outlining a plasma display system in accordance with the exemplary embodiment.
Fig. 4 is a chart of driving voltage waveforms applied to respective electrodes of the panel for use in the plasma display apparatus in accordance with the exemplary embodiment.
Fig. 5 is a schematic diagram showing a subfield structure of the plasma display apparatus and an opening/closing operation of a pair of shutter glasses in accordance with the exemplary embodiment.
Fig. 6 is a schematic diagram showing the subfield structure of the plasma display apparatus, and opening/closing states of a right eye shutter and a left eye shutter in accordance with the exemplary embodiment.
Fig. 7 is a characteristic diagram showing the relation between a transmittance of the pair of shutter glasses and a hue.

### DESCRIPTION OF EMBODIMENTS

Hereinafter, a plasma display apparatus in accordance with an exemplary embodiment of the present invention is described, with reference to the accompanying drawings.

### EXEMPLARY EMBODIMENT

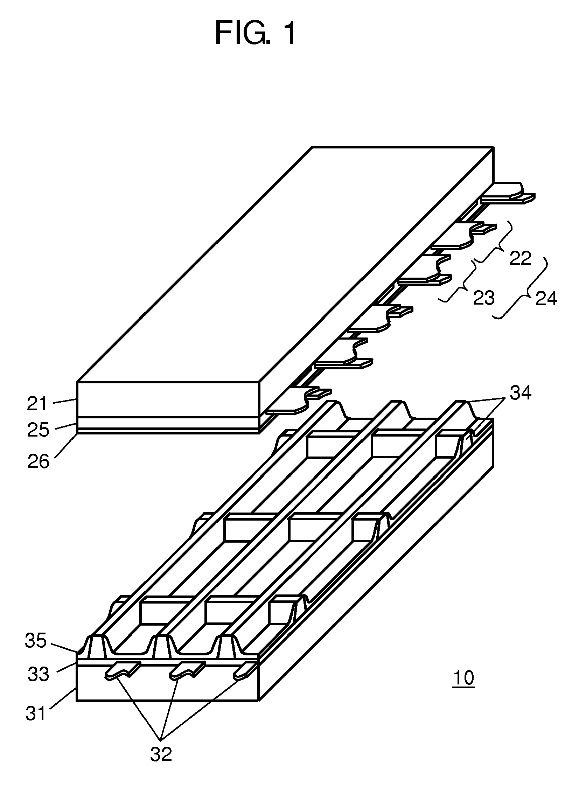

Fig. 1 is an exploded perspective view showing a structure of panel 10 for use in the plasma display apparatus in accordance with the exemplary embodiment of the present invention. A plurality of display electrode pairs 24, each including scan electrode 22 and sustain electrode 23, is disposed on glass front substrate 21. Dielectric layer 25 is formed so as to cover scan electrodes 22 and sustain electrodes 23. Protective layer 26 is formed over dielectric layer 25. Protective layer 26 is made of a material predominantly composed of magnesium oxide (MgO).

A plurality of data electrodes 32 is formed on rear substrate 31. Dielectric layer 33 is formed so as to cover data electrodes 32, and mesh barrier ribs 34 are formed on the dielectric layer. On the side faces of barrier ribs 34 and on dielectric layer 33, phosphor layers 35 for emitting light of red color (R), green color (G), and blue color (B) are formed.

Front substrate 21 and rear substrate 31 face each other such that display electrode pairs 24 intersect data electrodes 32 with a small discharge space sandwiched between the electrodes. The outer peripheries of the substrates are sealed with a sealing material, such as a glass frit. In the inside discharge space, a mixture gas of neon and xenon, for example, is sealed as a discharge gas. In this embodiment, a discharge gas having a xenon partial pressure of approximately 10% is used to enhance emission efficiency.

The discharge space is partitioned into a plurality of compartments by barrier ribs 34. Discharge cells are formed in the intersecting parts of display electrode pairs 24 and data electrodes 32. The discharge cells discharge and emit light (light up) so as to display a color image on panel 10.

In panel 10, three consecutive discharge cells arranged in the extending direction of display electrode pair 24, i.e. a discharge cell for emitting light of red color (R), a discharge cell for emitting light of green color (G), and a discharge cell for emitting light of blue (B) color, form one pixel.

The structure of panel 10 is not limited to the above, and may include barrier ribs in a stripe pattern, for example. The mixture ratio of the discharge gas is not limited to the above numerical value, and other mixture ratios may be used.

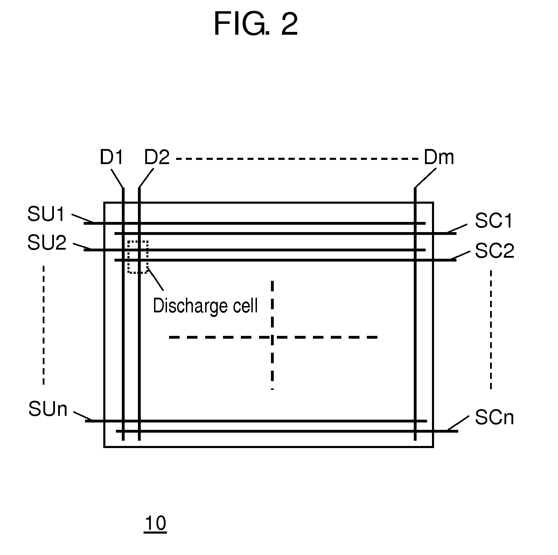

Fig. 2 is an electrode array diagram of panel 10 for use in the plasma display apparatus in accordance with the exemplary embodiment of the present invention. Panel 10 has n scan electrode SC1-scan electrode SCn (scan electrodes 22 in Fig. 1) and n sustain electrode SU1-sustain electrode SUn (sustain electrodes 23 in Fig. 1) both long in the row direction (line direction), and m data electrode D1-data electrode Dm (data electrodes 32 in Fig. 1) long in the column direction. A discharge cell is formed in the part where a pair of scan electrode SCi (i=1-n) and sustain electrode SUi intersects one data electrode Dj (j=1-m). That is, one display electrode pair 24 has m discharge cells, which form m/3 pixels. Then, m×n discharge cells are formed in the discharge space, and the area having m×n discharge cells is the image display area of panel 10. For example, in a panel having 1920×1080 pixels, m=1920×3 and n=1080.

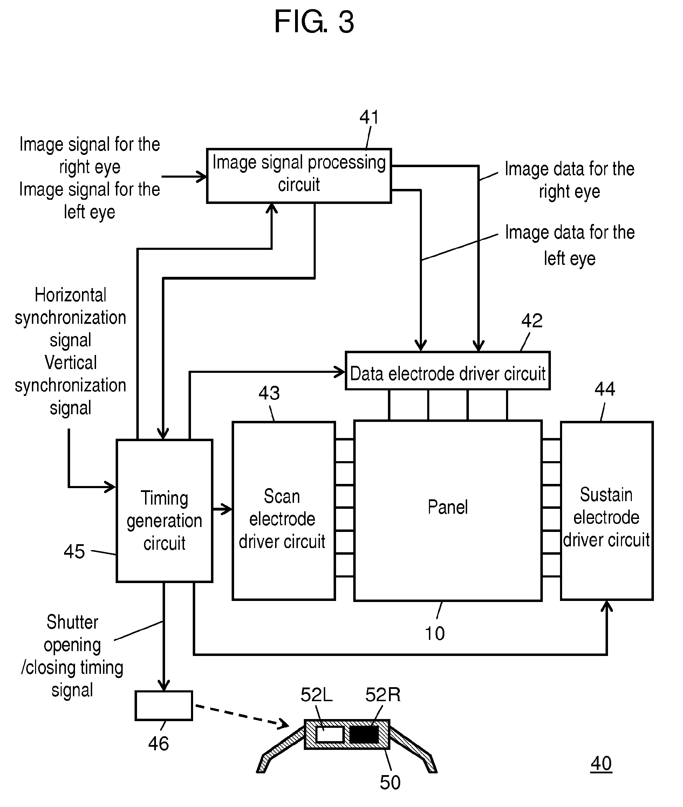

Fig. 3 shows a circuit block diagram of plasma display apparatus 40 and a diagram outlining a plasma display system in accordance with the exemplary embodiment of the present invention. The plasma display system of this exemplary embodiment includes plasma display apparatus 40 and pair of shutter glasses 50 as the elements.

Plasma display apparatus 40 includes the following elements:
panel 10 having a plurality of discharge cells arranged therein, each of the discharge cells having scan electrode 22, sustain electrode 23, and data electrode 32; and
a driver circuit for driving panel 10.
The driver circuit includes image signal processing circuit 41; data electrode driver circuit 42; scan electrode driver circuit 43; sustain electrode driver circuit 44; timing generation circuit 45; and electric power supply circuits (not shown) for supplying electric power necessary for each circuit block. Plasma display apparatus 40 includes timing signal output part 46. Timing signal output part 46 outputs shutter opening/closing timing signals for controlling the opening/closing of the shutters of pair of shutter glasses 50 used by the user.

Image signal processing circuit 41 allocates gradation values to each discharge cell, based on an input image signal. The image signal processing circuit converts the gradation values into image data representing light emission and no light emission in each subfield. For instance, when input image signal sig includes an R signal, a G signal, and a B signal, R, G, and B gradation values are allocated to the respective discharge cells, based on the R signal, G signal, and B signal. When input image signal sig includes a luminance signal (Y signal) and a chroma signal (C signal, R-Y signal and B-Y signal, u signal and v signal, or the like), the R signal, G signal, and B signal are calculated based on the luminance signal and the chroma signal, and thereafter the R, G, and B gradation values (gradation values represented in one field) are allocated to the respective discharge cells. Then, the R, G, and B gradation values allocated to the respective discharge cells are converted into image data representing light emission and no light emission in each subfield. When the input image signal is a 3D image signal that includes an image signal for the right eye and an image signal for the left eye and the 3D image signal is displayed on panel 10, the image signal for the right eye and the image signal for the left eye are alternately input to image signal processing circuit 41 in each field. Thus, image signal processing circuit 41 converts the image signal for the right eye into image data for the right eye, and the image signal for the left eye into image data for the left eye.

Data electrode driver circuit 42 converts the image data for the right eye and the image data for the left eye into signals (address pulses) corresponding to each of data electrode D1-data electrode Dm, and applies the signals to corresponding data electrode D1-data electrode Dm.

Timing generation circuit 45 generates various timing signals for controlling the operation of each circuit block, based on a horizontal synchronization signal and a vertical synchronization signal. Then, the timing generation circuit supplies the generated timing signals to respective circuit blocks (e.g. image signal processing circuit 41, data electrode driver circuit 42, scan electrode driver circuit 43, and sustain electrode driver circuit 44). Timing generation circuit 45 also outputs shutter opening/closing timing signals for controlling the opening/closing operation of the shutters of pair of shutter glasses 50, to timing signal output part 46. Timing generation circuit 45 sets a shutter opening/closing timing signal to ON ("1") when a shutter of pair of shutter glasses 50 is opened (in a state of transmitting visible light). The timing generation circuit sets the shutter opening/closing timing signal to OFF ("0") when the shutter of pair of shutter glasses 50 is closed (in a state of blocking visible light). The shutter opening/closing timing signals include two types of timing signals: a timing signal (for opening/closing the right eye shutter) that is set to ON in response to a field for the right eye for the display of an image signal for the right eye, and is set to OFF in response to a field for the left eye for the display of an image signal for the left eye; and a timing signal (for opening/closing the left eye shutter) that is set to ON in response to a field for the left eye for the display of an image signal for the left eye, and is set to OFF in response to a field for the right eye for the display of an image signal for the right eye.

Timing signal output part 46 includes a light-emitting element, such as a light-emitting diode (LED), and supplies shutter opening/closing timing signals to pair of shutter glasses 50 as those converted into infrared signals, for example.

Scan electrode driver circuit 43 has an initializing waveform generation circuit, a sustain pulse generation circuit, and a scan pulse generation circuit (not shown). The initializing waveform generation circuit generates an initializing waveform to be applied to scan electrode SC1-scan electrode SCn in the initializing periods. The sustain pulse generation circuit generates a sustain pulse to be applied to scan electrode SC1-scan electrode SCn in the sustain periods. The scan pulse generation circuit has a plurality of scan electrode driver ICs (scan ICs), and generates a scan pulse to be applied to scan electrode SC1-scan electrode SCn in the address periods. Scan electrode driver circuit 43 drives each of scan electrode SC1-scan electrode SCn in response to the timing signals supplied from timing generation circuit 45.

Sustain electrode driver circuit 44 has a sustain pulse generation circuit and a circuit for generating voltage Ve1 and voltage Ve2 (not shown), and drives sustain electrode SU1-sustain electrode SUn in response to the timing signals supplied from timing generation circuit 45.

Pair of shutter glasses 50 has right eye shutter 52R and left eye shutter 52L. Right eye shutter 52R and left eye shutter 52L can be opened and closed independently. In pair of shutter glasses 50, right eye shutter 52R and left eye shutter 52L are opened and closed in response to shutter opening/closing timing signals that are supplied from timing signal output part 46. Right eye shutter 52R opens (transmits visible light) when the timing signal for opening/closing the right eye shutter is set to ON, and closes (blocks visible light) when that timing signal is set to OFF. Left eye shutter 52L opens (transmits visible light) when the timing signal for opening/closing the left eye shutter is set to ON, and closes (blocks visible light) when that timing signal is set to OFF. Right eye shutter 52R and left eye shutter 52L can be formed of liquid crystal, for example. However, in the present invention, the material making up the shutters is not limited to liquid crystal. As long as blocking and transmission of visible light can be switched at a high speed, any material may be used.

Next, driving voltage waveforms for driving panel 10 and the operation thereof are outlined. Plasma display apparatus 40 of this exemplary embodiment display gradations by a subfield method. In the subfield method, one field is divided into a plurality of subfields along a temporal axis, and a luminance weight is set for each subfield. Then, by controlling the light emission and no light emission in each discharge cell in each subfield, an image is displayed on panel 10.

In this exemplary embodiment, image signals input to plasma display apparatus 40 are 3D image signals, i.e. image signals for stereoscopic view that include an image signal for the right eye and an image signal for the left eye alternately repeated in each field. Then, a field for the right eye for the display of an image signal for the right eye and a field for the left eye for the display of an image signal for the left eye are alternately repeated. Thereby, an image for stereoscopic view made of the image for the right eye and the image for the left eye is displayed on panel 10. Further, the user perceives the image for stereoscopic view (3D image) displayed on panel 10 through pair of shutter glasses 50 where right eye shutter 52R and left eye shutter 52L are opened and closed in synchronization with the field for the right eye and the field for the left eye, respectively. With this operation, the user can stereoscopically view the 3D image displayed on panel 10.

In the field for the right eye and the field for the left eye, only the signals of the images to be displayed are different. The subfield structure, e.g. the number of subfields forming one field, the luminance weights of the respective subfields, and the arrangement of the subfields, is identical. First, the structure of one field and the driving voltage waveforms applied to the respective electrodes are described. Hereinafter, when a field "for the right eye" and a field "for the left eye" do not need to be discriminated, each of the field for the right eye and the field for the left eye is simply referred to as a field, and each of an image signal for the right eye and an image signal for the left eye is also simply referred to as an image signal.

Each of the plurality of subfields included in each field has an initializing period, an address period, and a sustain period. In the initializing period, an initializing discharge is caused so as to form wall charge necessary for the subsequent address discharge on the respective electrodes. In the address period, an address pulse is applied selectively to data electrodes 32 so as to cause an address discharge and form wall charge in the discharge cells to be lit. In the sustain period, sustain pulses corresponding in number to the luminance weight predetermined for each subfield are alternately applied to display electrode pairs 24 so as to cause a sustain discharge and emit light in the discharge cells having undergone the address discharge.

In this exemplary embodiment, each of the field for the right eye and the field for the left eye is formed of five subfields (subfield SF1, subfield SF2, subfield SF3, subfield SF4, and subfield SF5). Respective subfields have luminance weights of 16, 8, 4, 2 and 1. The luminance weight represents a ratio of the magnitudes of luminance displayed in the respective subfields. In the sustain period of each subfield, sustain pulses corresponding in number to the luminance weight are generated. For example, in the sustain period of a subfield having the luminance weight "8", a number of sustain pulses that are eight times the number of sustain pulses in the subfield having the luminance weight "1" are generated, and a number of sustain pulses that are four times the number of sustain pulses in the subfield having the luminance weight "2" are generated. Therefore, the luminance of the light emission in the subfield having the luminance weight "8" is approximately eight times as high as that in the subfield having the luminance weight "1", and approximately four times as high as that in the subfield having the luminance weight "2". Therefore, the selective light emission caused by the combination of the respective subfields in response to image signals allows the display of various gradations and an image.

In the initializing period of one of the plurality of subfields, an all-cell initializing operation for causing an initializing discharge in all the discharge cells is performed. In the initializing periods of the other subfields, a selective initializing operation for causing an initializing discharge selectively in the discharge cells having undergone a sustain discharge in the sustain period of the immediately preceding subfield is performed. Hereinafter, the initializing period where an all-cell initializing operation is performed is referred to as an "all-cell initializing period", and the subfield including the all-cell initializing period is referred to as "all-cell initializing subfield". The initializing period where a selective initializing operation is performed is referred to as a "selective initializing period", and the subfield including the selective initializing period is referred to as "selective initializing subfield".

Hereinafter, in this exemplary embodiment, a description is provided for an example where the top subfield of each field is the all-cell initializing subfield. That is, in the initializing period of subfield SF1, an all-cell initializing operation is performed. In the initializing periods of subfield SF2-subfield SF5, a selective initializing operation is performed. This structure can cause an initializing discharge in all the discharge cells at least once in one field, thus stabilizing the address operation after the all-cell initializing operation. Further, the light emission unrelated to image display is only the light emission caused by the discharge in the all-cell initializing operation in subfield SF1. Thus, luminance of black level, i.e. the luminance of a black display area where no sustain discharge occurs, is caused only by the weak light emission in the all-cell initializing operation. Thereby, an image of high contrast can be displayed on panel 10.

In the sustain period of each subfield, a number of sustain pulses based on the luminance weight of the corresponding subfield multiplied by a predetermined proportionality factor are applied to respective display electrode pairs 24. This proportionality factor is a luminance magnification.

In this exemplary embodiment, when the luminance magnification is 1, two sustain pulses are generated in the sustain period of a subfield having the luminance weight "1", and one sustain pulse is applied to each of scan electrodes 22 and sustain electrodes 23. That is, in each sustain period, sustain pulses equal in number to the luminance weight of the corresponding subfield multiplied by the predetermined luminance magnification are applied to respective scan electrodes 22 and sustain electrodes 23. Therefore, when the luminance magnification is 2, the number of sustain pulses generated in the sustain period of a subfield having the luminance weight "1" is 4. When the luminance magnification is 3, the number of sustain pulses generated in the sustain period of a subfield having the luminance weight "1" is 6.

However, in this exemplary embodiment, the number of subfields forming one field, or the luminance weights of the respective subfields is not limited to the above values. Alternatively, the subfield structure may be switched in response to an image signal, for example.

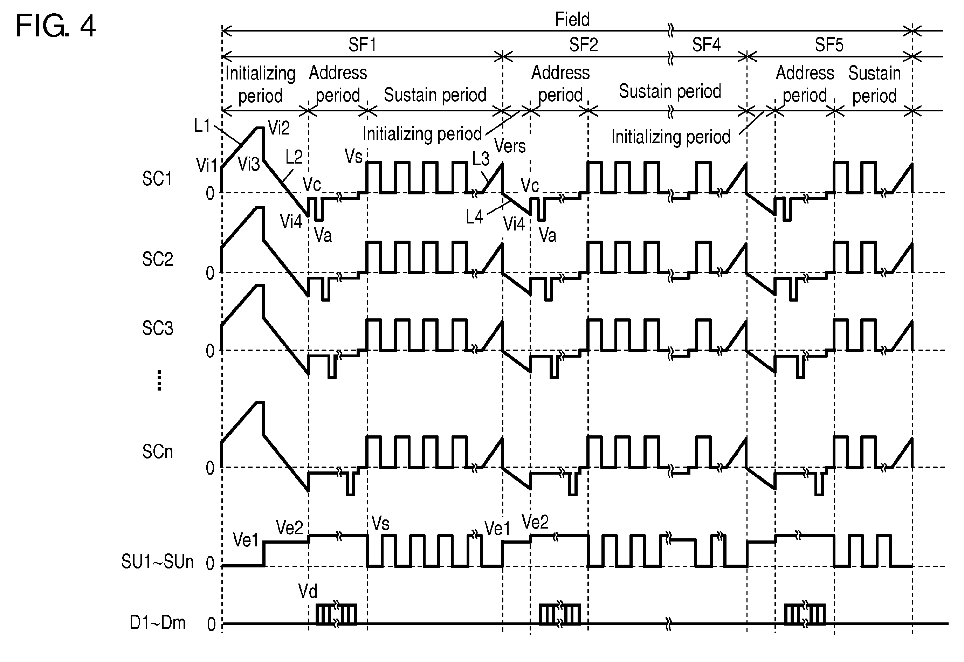

Fig. 4 is a chart of driving voltage waveforms applied to the respective electrodes of panel 10 for use in plasma display apparatus 40 in accordance with the exemplary embodiment of the present invention. Fig. 4 shows driving voltage waveforms applied to the following electrodes: scan electrodes 22 from scan electrode SC1 for undergoing an address operation first in the address periods to scan electrode SC3; scan electrode SCn for undergoing an address operation last in the address periods; sustain electrode SU1-sustain electrode SUn; and data electrodeD1-data electrode Dm.

In the following description, driving voltage waveforms in subfield SF1, i.e. an all-cell initializing subfield, and in subfield SF2, i.e. a selective initializing subfield, are outlined. The driving voltage waveforms in the other subfields are substantially similar to those in subfield SF2 except for the numbers of sustain pulses in the sustain periods. Scan electrode SCi, sustain electrode SUi, and data electrode Dk in the following description are the electrodes selected from the respective electrodes, based on image data (data representing the light emission and no light emission in each subfield).

First, a description is provided for subfield SF1, i.e. an all-cell initializing subfield.

In the first half of the initializing period (all-cell initializing period) of subfield SF1, voltage 0 (V) is applied to each of data electrode D1-data electrode Dm and sustain electrode SU1-sustain electrode SUn. Voltage Vi1 is applied to scan electrode SC1-scan electrode SCn. Voltage Vi1 is set to a voltage lower than a discharge start voltage with respect to sustain electrode SU1-sustain electrode SUn. Further, a ramp waveform voltage gently rising from voltage Vi1 toward voltageVi2 is applied to scan electrode SC1-scan electrode SCn. Hereinafter, this ramp waveform voltage is referred to as "up-ramp voltage L1". Voltage Vi2 is set to a voltage exceeding the discharge start voltage with respect to sustain electrode SU1-sustain electrode SUn. Examples of the gradient of up-ramp voltage L1 include a numerical value of approximately 1.3 V/µsec.

While up-ramp voltage L1 is rising, a weak initializing discharge continuously occurs between scan electrode SC1-scan electrode SCn and sustain electrode SU1-sustain electrode SUn, and between scan electrode SC1-scan electrode SCn and data electrode D1-data electrode Dm. Then, negative wall voltage accumulates on scan electrode SC1-scan electrode SCn, and positive wall voltage accumulates on data electrode D1-data electrode Dm and sustain electrode SU1-sustain electrode SUn. This wall voltage on the electrodes means voltages that are generated by the wall charge accumulated on the dielectric layers covering the electrodes, the protective layer, the phosphor layers, or the like.

In the second half of the initializing period (all-cell initializing period), positive voltageVe1 is applied to sustain electrode SU1-sustain electrode SUn, and voltage 0 (V) is applied to data electrode D1-data electrode Dm. A ramp waveform voltage gently falling from voltage Vi3 toward negative voltageVi4 is applied to scan electrode SC1-scan electrode SCn. Hereinafter, this ramp waveform voltage is referred to as "down-ramp voltage L2". Voltage Vi3 is set to a voltage lower than the discharge start voltage with respect to sustain electrode SU1-sustain electrode SUn, and voltage Vi4 is set to a voltage exceeding the discharge start voltage. Examples of the gradient of down-ramp voltage L2 include a numerical value of approximately -2.5 V/µsec.

While down-ramp voltage L2 is applied to scan electrode SC1-scan electrode SCn, a weak initializing discharge occurs between scan electrode SC1-scan electrode SCn and sustain electrode SU1-sustain electrode SUn, and between scan electrode SC1-scan electrode SCn and data electrodeD1-data electrode Dm. This weak discharge reduces the negative wall voltage on scan electrode SC1-scan electrode SCn and the positive wall voltage on sustain electrode SU1-sustain electrode SUn, and adjusts the positive wall voltage on data electrode D1-data electrode Dm to a value appropriate for the address operation. In this manner, the all-cell initializing operation for causing an initializing discharge in all the discharge cells is completed.

In the subsequent address period, scan pulse voltage Va is sequentially applied to scan electrode SC1-scan electrode SCn. Positive address pulse voltage Vd is applied to data electrode Dk (k=1-m) corresponding to a discharge cell to be lit among data electrode D1-data electrode Dm. Thus, an address discharge is selectively caused in the respective discharge cells.

Specifically, first, voltage Ve2 is applied to sustain electrode SU1-sustain electrode SUn, and voltage Vc (where voltage Vc=voltage Va+voltage Vsc) is applied to scan electrode SC1-scan electrode SCn.

Next, a scan pulse at negative voltage Va is applied to scan electrode SC1 in the first line. Further, in response to an image signal, an address pulse at positive voltage Vd is applied to data electrode Dk of a discharge cell to be lit in the first line among data electrode D1-data electrode Dm. Thus, the voltage difference in the intersecting part of data electrode Dk and scan electrode SC1 in the discharge cell applied with the address pulse is obtained by adding the difference between the wall voltage on data electrode Dk and the wall voltage on scan electrode SC1 to a difference in externally applied voltage (voltage Vd-voltage Va). Thus, the voltage difference between data electrode Dk and scan electrode SC1 exceeds the discharge start voltage, and a discharge occurs between data electrode Dk and scan electrode SC1.

Since voltage Ve2 is applied to sustain electrode SU1-sustain electrode SUn, the voltage difference between sustain electrode SU1 and scan electrode SC1 is obtained by adding the difference between the wall voltage on sustain electrode SU1 and the wall voltage on scan electrode SC1 to a difference in externally applied voltage (voltageVe2-voltageVa). At this time, setting voltage Ve2 to a voltage value slightly lower than the discharge start voltage can make the state where a discharge is likely to occur but does not actually occurs between sustain electrode SU1 and scan electrode SC1.

With this setting, a discharge occurring between data electrode Dk and scan electrode SC1 can trigger a discharge between the areas of sustain electrode SU1 and scan electrode SC1 intersecting data electrode Dk. Thus, an address discharge occurs in the discharge cell to be lit. Positive wall voltage accumulates on scan electrode SC1, and negative wall voltage accumulates on sustain electrode SU1. Negative wall voltage also accumulates on data electrode Dk.

In this manner, address operation is performed so as to cause an address discharge in the discharge cells to be lit in the first line and accumulate wall voltage on the respective electrodes. In contrast, the voltage in the intersecting parts of scan electrode SC1 and data electrodes 32 applied with no address pulse does not exceed the discharge start voltage, and thus no address discharge occurs. The above address operation is repeated until the operation reaches the discharge cells in the n-th line. Thus, the address period is completed.

In the subsequent sustain period, sustain pulses corresponding in number to the luminance weight multiplied by a predetermined luminance magnification are alternately applied to display electrode pairs 24. This causes a sustain discharge in the discharge cells having undergone the address discharge, and the discharge cells to emit light.

In this sustain period, first, a sustain pulse at positive voltage Vs is applied to scan electrode SC1-scan electrode SCn, and a ground electric potential as a base electric potential, i.e. voltage 0 (V), is applied to sustain electrode SU1-sustain electrode SUn. Then, in the discharge cells having undergone the address discharge, the voltage difference between scan electrode SCi and sustain electrode SUi is obtained by adding the difference between the wall voltage on scan electrode SCi and the wall voltage on sustain electrode SUi to sustain pulse voltage Vs.

Thus, the voltage difference between scan electrode SCi and sustain electrode SUi exceeds the discharge start voltage and a sustain discharge occurs between scan electrode SCi and sustain electrode SUi. Ultraviolet rays generated by this discharge cause phosphor layers 35 to emit light. With this discharge, negative wall voltage accumulates on scan electrode SCi, and positive wall voltage accumulates on sustain electrode SUi. Positive wall voltage also accumulates on data electrode Dk. In the discharge cells having undergone no address discharge in the address period, no sustain discharge occurs and the wall voltage at the completion of the initializing period is maintained.

Subsequently, voltage 0 (V) as the base electric potential is applied to scan electrode SC1-scan electrode SCn, and a sustain pulse is applied to sustain electrode SU1-sustain electrode SUn. In the discharge cells having undergone the sustain discharge, the voltage difference between sustain electrode SUi and scan electrode SCi exceeds the discharge start voltage. Thereby, a sustain discharge occurs between sustain electrode SUi and scan electrode SCi again. Negative wall voltage accumulates on sustain electrode SUi, and positive wall voltage accumulates on scan electrode SCi.

Similarly, sustain pulses corresponding in number to the luminance weight multiplied by the luminance magnification are alternately applied to scan electrode SC1-scan electrode SCn and sustain electrode SU1-sustain electrode SUn. Thereby, the sustain discharge is continued in the discharge cells having undergone the address discharge in the address period.

After the sustain pulses have been generated in the sustain period, a ramp waveform voltage gently rising from voltage 0 (V) toward voltage Vers is applied to scan electrode SC1-scan electrode SCn while voltage 0 (V) is applied to sustain electrode SU1-sustain electrode SUn and data electrode D1-data electrode Dm. Hereinafter, this ramp waveform voltage is referred to as "erasing ramp voltage L3". The gradient of erasing ramp voltage L3 is set steeper than the gradient of up-ramp voltage L1. Examples of the gradient of erasing ramp voltage L3 include a numerical value of approximately 10 V/µsec. Voltage Vers set to a voltage exceeding the discharge start voltage causes a weak discharge between sustain electrode SUi and scan electrode SCi in the discharge cell having undergone a sustain discharge. This weak discharge continuously occurs while the voltage applied to scan electrode SC1-scan electrode SCn is rising above the discharge start voltage.

At this time, the charged particles generated by this weak discharge accumulate on sustain electrode SUi and scan electrode SCi so as to reduce the voltage difference between sustain electrode SUi and scan electrode SCi. Thereby, in the discharge cells having undergone the sustain discharge, a part or the whole of the wall voltage on scan electrode SCi and sustain electrode SUi is erased while the positive wall charge is left on data electrode Dk. That is, the discharge caused by erasing ramp voltage L3 works as "erasing discharge" that erases unnecessary wall charge accumulated in the discharge cells having undergone the sustain discharge.

After the rising voltage has reached voltage Ver as the predetermined voltage, the voltage applied to scan electrode SC1-scan electrode SCn is lowered to voltage 0 (V) as the base electric potential. Thus, the sustain operation in the sustain period is completed.

In the initializing period (selective initializing period) of subfield SF2, driving voltage waveforms where the first half of the initializing period of subfield SF1 is omitted are applied to the respective electrodes. Voltage Ve1 is applied to sustain electrode SU1-sustain electrode SUn, and voltage 0 (V) is applied to data electrode D1-data electrode Dm. Down-ramp voltage L4, which gently falls from a voltage (e.g. voltage 0 (V)) lower than the discharge start voltage toward negative voltage Vi4 exceeding the discharge start voltage, is applied to scan electrode SC1-scan electrode SCn. Examples of the gradient of down-ramp voltage L4 include a numerical value of approximately -2.5 V/µsec.

With this voltage application, a weak initializing discharge occurs in the discharge cells having undergone a sustain discharge in the sustain period of the immediately preceding subfield (subfield SF1 in Fig. 4). This weak discharge reduces the wall voltage on scan electrode SCi and sustain electrode SUi. Since sufficient positive wall voltage is accumulated on data electrode Dk by the immediately preceding sustain discharge, the excess part of this wall voltage is discharged and the wall voltage is adjusted to a value appropriately for the address operation.

In contrast, in the discharge cells having undergone no sustain discharge in the sustain period of the immediately preceding subfield, no initializing discharge occurs, and the wall charge at the completion of the initializing period of the immediately preceding subfield is maintained. In this manner, in the initializing operation in subfield SF2, a selective initializing operation is performed so as to cause an initializing discharge in the discharge cells having undergone an address operation in the address period of the immediately preceding subfield, i.e. in the discharge cells having undergone a sustain discharge in the sustain period of the immediately preceding subfield.

In the address period and the sustain period of subfield SF2, the driving voltage waveforms similar to those in the address period and the sustain period of subfield SF1 except for the number of sustain pulses are applied to the respective electrodes. In subfield SF3 and thereafter, the driving voltage waveforms similar to those in subfield SF2 except for the numbers of sustain pulses are applied to the respective electrodes.

The above description has outlined the driving voltage waveforms applied to the respective electrodes of panel 10 in this exemplary embodiment.

The voltage to be applied to the respective electrodes in this exemplary embodiment includes the following values: voltage Vi1=145 (V); voltage Vi2=335 (V); voltage Vi3=190 (V); voltage Vi4=-160 (V); voltage Va=-180 (V); voltage Vc=-35 (V); voltage Vs=190 (V); voltage Vers=190 (V); voltage Ve1=125 (V); voltage Ve2=130 (V); and voltage Vd=60 (V). However, these voltage values are only examples. Preferably, each of the voltage values is set appropriately for the characteristics of panel 10, the specifications of plasma display apparatus 40, or the like. For example, voltage Ve1 and voltage Ve2 may be equal, and voltage Vc may be at a positive value.

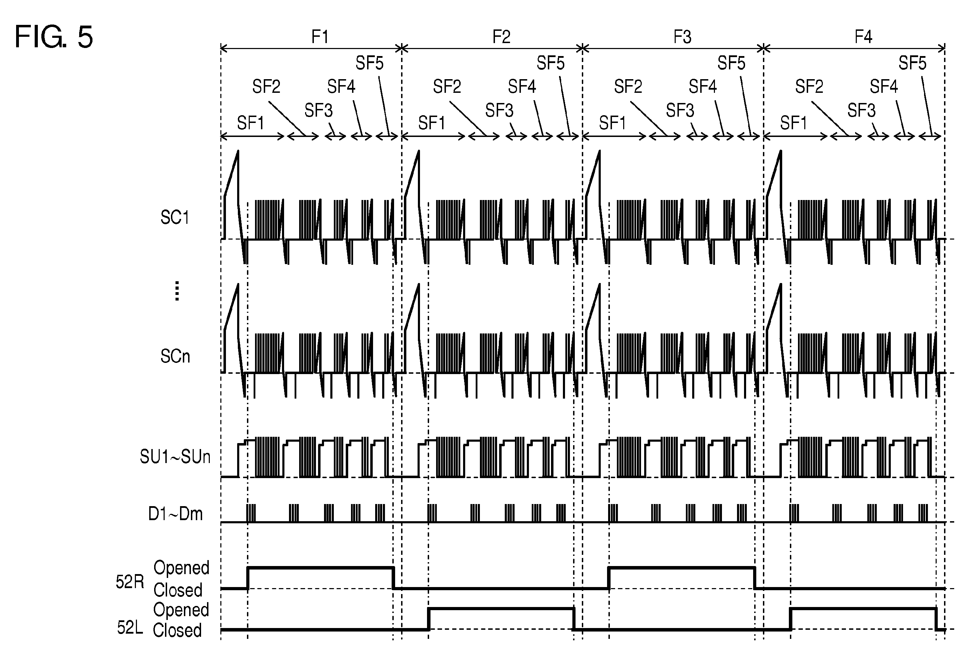

Next, a description is provided for a subfield structure with which plasma display apparatus 40 of this exemplary embodiment is driven together with the opening/closing operation of the shutters in pair of shutter glasses 50. Fig. 5 is a schematic diagram showing a subfield structure of plasma display apparatus 40 and an opening/closing operation of pair of shutter glasses 50 in accordance with the exemplary embodiment of the present invention. Fig. 5 shows driving voltage waveforms applied to scan electrode SC1 for undergoing an address operation first in the address periods, scan electrode SCn for undergoing an address operation last in the address periods, sustain electrode SU1-sustain electrode SUn, and data electrodeD1-data electrode Dm, together with an opening/closing operation of right eye shutter 52R and left eye shutter 52L. Fig. 5 also shows four fields (field F1-field F4).

In this exemplary embodiment, in order to display a 3D image on panel 10, a field for the right eye and a field for the left eye are alternately generated. For example, among four fields shown in Fig. 5, field F1 and field F3 are fields for the right eye, and field F2 and field F4 are fields for the left eye. The user who views a 3D image displayed on panel 10 through pair of shutter glasses 50 perceives images displayed in two fields (an image for the right eye and an image for the left eye) as one 3D image. Thus, the user perceives the number of images displayed on panel 10 per second as a half the number of fields displayed per second. For instance, when the field frequency of 3D images displayed on panel (the number of fields generated per second) is 60 Hz, the user perceives thirty 3D images per second. Therefore, in order to display sixty 3D images per second, the field frequency needs to be set to 120 Hz, which is twice of 60 Hz. Then, in this exemplary embodiment, the field frequency (the number of fields generated per second) is set to twice (e.g. 120Hz) the general field frequency so that the user can perceive a smooth 3D moving image.

The opening/closing operation of right eye shutter 52R and left eye shutter 52L of pair of shutter glasses 50 is controlled in response to the ON/OFF of the shutter opening/closing timing signals output from timing signal output part 46. Timing generation circuit 45 generates shutter opening/closing timing signals such that both timing signals are set to OFF (such that both of a timing signal for opening/closing the right eye shutter and a timing signal for opening/closing the left eye shutter are set to OFF) in the all-cell initializing period of a field for the right eye and in the all-cell initializing period of a field for the left eye. That is, timing generation circuit 45 generates shutter opening/closing timing signals such that both of right eye shutter 52R and left eye shutter 52L of pair of shutter glasses 50 close (block visible light) in the all-cell initializing period of a field for the right eye and in the all-cell initializing period of a field for the left eye. In field F1 and field F3, i.e. fields for the right eye, a shutter opening/closing timing signal (timing signal for opening/closing the right eye shutter) is generated such that right eye shutter 52R opens before the start of the sustain period of subfield SF1, i.e. the top subfield, and right eye shutter 52R closes after the generation of sustain pulses in the sustain period of subfield SF5, i.e. the last subfield, has been completed. In field F2 and field F4, i.e. fields for the left eye, a shutter opening/closing timing signal (timing signal for opening/closing the left eye shutter) is generated such that left eye shutter 52L opens before the start of the sustain period of subfield SF1, and left eye shutter 52L closes after the generation of sustain pulses in the sustain period of subfield SF5 has been completed. Thereafter, the similar operation is repeated in each field.

Therefore, in this exemplary embodiment, both of right eye shutter 52R and left eye shutter 52L of pair of shutter glasses 50 are in a closed state in the initializing period (all-cell initializing period) of the all-cell initializing subfield (subfield SF1) in any of the fields for the right eye and the fields for the left eye. That is, the light emission generated by the all-cell initializing operation is blocked by right eye shutter 52R and left eye shutter 52L and does not enter the eyes of the user. In this state, the user who views a 3D image through pair of shutter glasses 50 does not perceive the light emission caused by the all-cell initializing operation. This phenomenon reduces the luminance of black level by the luminance caused by that light emission. In this manner, in this exemplary embodiment, the user can perceive an image of high contrast with reduced luminance of black level.

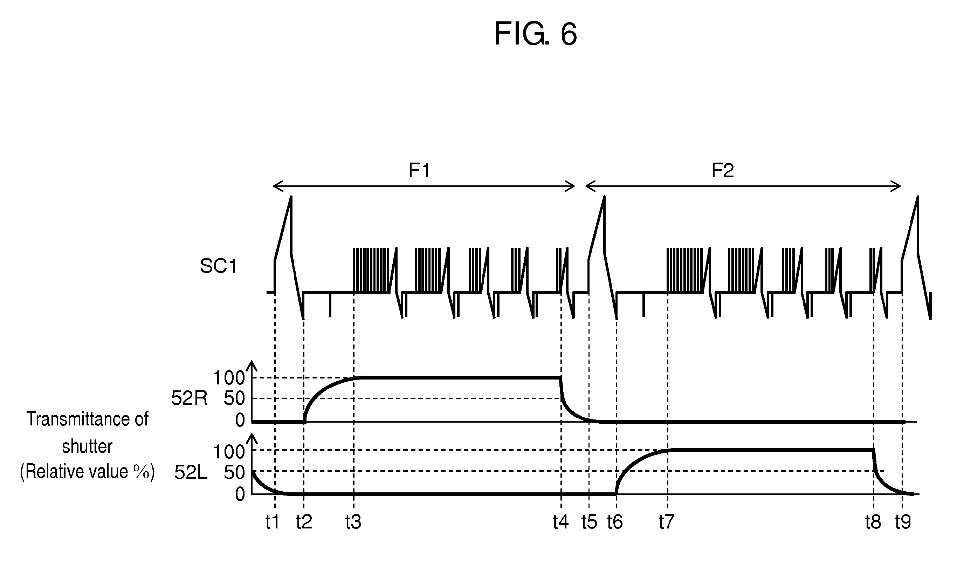

In this exemplary embodiment, the above state where "shutters are closed" is not limited to the state where right eye shutter 52R and left eye shutter 52L are completely closed. Fig. 6 is a schematic diagram showing the subfield structure of plasma display apparatus 40, and opening/closing states of right eye shutter 52R and left eye shutter 52L in accordance with the exemplary embodiment of the present invention. Fig. 6 shows the driving voltage waveforms applied to scan electrode SC1 and the opening/closing states of right eye shutter 52R and left eye shutter 52L of pair of shutter glasses 50. Fig. 6 also shows two fields (field for the right eye F1 and field for the left eye F2).

Fig. 6 shows the opening/closing states of right eye shutter 52R and left eye shutter 52L, using a transmittance. In the diagram showing opening/closing of the shutters, along the vertical axis, a transmittance of the shutter is relatively shown with the transmittance of the shutter in the completely opened state (the maximum transmittance) as 100% and the transmittance of the shutter in the completely closed state (the minimum transmittance) as 0%. The horizontal axis shows time.

In this exemplary embodiment, preferably, the timing at which the shutters are closed is set such that left eye shutter 52L and right eye shutter 52R have completely closed, i.e. the transmittance of each shutter has become 0%, immediately before the start of the all-cell initializing operation. Further, preferably, the timing at which the shutters are opened is set such that left eye shutter 52L or right eye shutter 52R have completely opened, i.e. the transmittance of each shutter has become 100%, immediately before the start of the sustain period of the top subfield (subfield SF1). However, the present invention is not limited to this structure.

In pair of shutter glasses 50, the time corresponding to the characteristics of the materials (e.g. liquid crystal) making up each shutter is taken after the shutter starts to close and before it completely closes, or after the shutter starts to open and before it completely opens. In pair of shutter glasses 50, each shutter takes approximately 0.5 msec, for example, to start to close and completely close, and takes approximately 2 msec, for example, to start to open and completely open.

Then, in this exemplary embodiment, when each shutter is closed, the timing at which the shutter is closed is set such that the transmittance of the shutter becomes equal to or lower than 30%, preferably 10%, immediately before the start of the all-cell initializing operation. In the example shown in Fig. 6, left eye shutter 52L is closed such that the transmittance of left eye shutter 52L becomes equal to or lower than 30%, preferably 10%, at time t1 (time t9, similarly) immediately before the start of the all-cell initializing operation in subfield SF1, i.e. the top subfield of field for the right eye F1. Right eye shutter 52R is closed such that the transmittance of right eye shutter 52R becomes equal to or lower than 30%, preferably 10%, at time t5 immediately before the start of the all-cell initializing operation in subfield SF1, i.e. the top subfield of field for the left eye F2.

At this time, it is preferable to set the time after the generation of the sustain pulses in the sustain period of the last subfield has completed and before the start of the all-cell initializing operation in the top subfield in consideration of the time taken after the shutter starts to close before it completely closes. In the example shown in Fig. 6, the interval between time t4 and time t5 is set in the following manner. At least when right eye shutter 52R starts to close at time t4 immediately after the generation of the sustain pulses has been completed in subfield SF5, i.e. the last subfield in field for the right eye F1, the transmittance of right eye shutter 52R becomes 30% (preferably 10%) or lower at time t5. Similarly, the interval between time t8 and time t9 is set in the following manner. At least when left eye shutter 52L starts to close at time t8 immediately after the generation of the sustain pulses has been completed in subfield SF5, i.e. the last subfield in field for the left eye F2, the transmittance of left eye shutter 52L becomes 30% (preferably 10%) or lower at time t9, immediately before the start of the all-cell initializing operation in subfield SF1 in the subsequent field for the right eye.

When each shutter is opened, the timing at which the shutter is opened is set such that the transmittance of the shutter becomes equal to or higher than 70%, preferably, 90%, immediately before the start of the sustain period of the top subfield (subfield SF1). In the example shown in Fig. 6, right eye shutter 52R is opened such that the transmittance of right eye shutter 52R becomes equal to or higher than 70%, preferably 90%, at time t3 immediately before the start of the generation of the sustain pulses in subfield SF1 in field for the right eye F1. Left eye shutter 52L is opened such that the transmittance of left eye shutter 52L becomes equal to or higher than 70%, preferably 90%, at time t7 immediately before the generation of the sustain pulses in subfield SF1 in field for the left eye F2.

At this time, it is preferable to set the time after the completion of the all-cell initializing operation before the start of the sustain pulses in consideration of the time taken after the shutter starts to open before it completely opens. In the example shown in Fig. 6, the interval between time t2 and time t3 is set in the following manner. At least when right eye shutter 52R starts to open at time t2 immediately after the completion of the all-cell initializing operation in subfield SF1 in field for the right eye F1 (that is, the transmittance of right eye shutter 52R immediately before time t2 is 0%), the transmittance of right eye shutter 52R becomes 70% (preferably 90%) or higher at time t3. Similarly, the interval between time t6 and time t7 is set in the following manner. At least when left eye shutter 52L starts to open at time t6 immediately after the completion of the all-cell initializing operation in subfield SF1 in field for the left eye F2 (that is, the transmittance of left eye shutter 52L immediately before time t6 is 0%), the transmittance of left eye shutter 52L becomes 70% (preferably 90%) or higher at time t7. However, in the subfield structure where the sustain period of subfield SF1 is unrelated to gradation display, settings other than the above can be used.

The above settings are intended to prevent a change in hue in the 3D image viewed by the user through pair of shutter glasses 50 when the light emission characteristics of respective red, green, and blue discharge cells (the light emission characteristics of phosphor layers 35) are different.

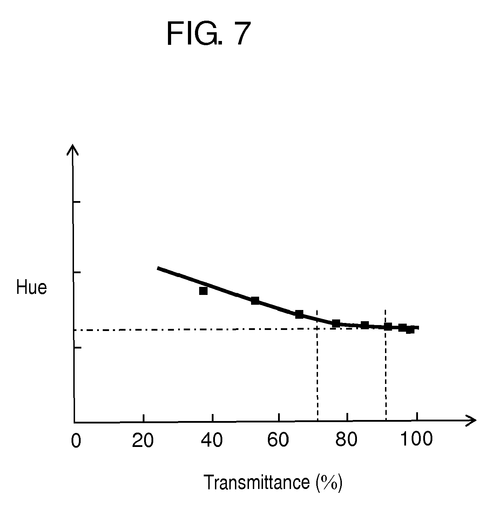

Fig. 7 is a characteristic diagram showing the relation between a transmittance of pair of shutter glasses 50 and a hue. In Fig. 7, the horizontal axis shows a transmittance of the shutter in pair of shutter glasses 50, indicating the state where the transmittance gradually rises with a lapse of time after the shutter has started to open. The vertical axis shows a hue with numerical values. In the vertical axis, the hue corresponding to white color is shown by an alternate long and short dash line. In the higher position above the line, the white color becomes more yellowish.

For instance, if the afterglow characteristics of a blue discharge cell are shorter than those of the discharge cells of the other colors, a change in hue where the while color looks yellowish, as shown in Fig. 7, can occur at timings at which the shutter starts to open. This is caused by the following phenomenon. Since the afterglow characteristics of a blue discharge cell are shorter than those of the discharge cells of the other colors, the light emission of blue color has ended before the shutter completely opens. After the shutter has completely opened, the light emissions of green and red colors are mainly perceived by the user.

However, the following facts have been experimentally verified. Within the range of the above numerical values, i.e. when the transmittance of each shutter in pair of shutter glasses 50 is equal to or higher than 70% at time t3 and at time t7, the user is difficult to distinguish the change in hue. Further, when the transmittance is equal to or higher than 90%, the hue is substantially equal to that at a transmittance of 100%. As described above, it has been experimentally verified that the change in hue can be prevented within the above numerical value range. However, preferably, each numerical value is set appropriately for the characteristics of panel 10, the specifications of plasma display apparatus 40, or the like.

As described above, in this exemplary embodiment, pair of shutter glasses 50 is controlled such that both of right eye shutter 52R and left eye shutter 52L are closed in the all-cell initializing periods of the fields for the right eye and in the all-cell initializing periods of the fields for the left eye. This control method enables the user who view a 3D image displayed on panel 10 through pair of shutter glasses 50 not to perceive the light emission caused by the all-cell initializing operation, thus providing an image with excellent luminance of black level where the luminance of the light emission caused by the all-cell initializing operation is reduced. That is, this control method can provide an image of high contrast by reducing the luminance of black level and thereby enhance the image display quality to the user who views panel 10 through pair of shutter glasses 50.

The driving voltage waveforms in Fig. 4 only show an example in the exemplary embodiment of the present invention. The present invention is not limited to these driving voltage waveforms.

Each circuit block shown in the exemplary embodiment of the present invention may be formed as an electric circuit that performs each operation shown in the exemplary embodiment, or formed of a microcomputer programmed so as to perform the similar operation, for example.

In the example described in this exemplary embodiment, one pixel is formed of discharge cells of R, G, and B three colors. Also in a panel that includes pixels, each formed of discharge cells of four or more colors, the configuration shown in this exemplary embodiment can be used and the same advantage can be provided.

The specific numerical values shown in the exemplary embodiment of the present invention are set based on the characteristics of panel 10 that has a 50-inch screen and 1080 display electrode pairs 24, and simply show examples in the exemplary embodiment. The present invention is not limited to these numerical values. Preferably, each numerical value is set optimally for the characteristics of the panel, the specification of the plasma display apparatus, or the like. Variations are allowed for each numerical value within the range in which the above advantage can be obtained. Further, the number of subfields, the luminance weights of the respective subfields, or the like is not limited to the values shown in the exemplary embodiments of the present invention. The subfield structure may be switched based on image signals, for example.

### INDUSTRIAL APPLICABILITY

The present invention can enhance the contrast by reducing the luminance of black level of a display image, and thereby enhance the image display quality, in a plasma display apparatus usable as a 3D image display apparatus. Thus, the present invention is useful as a plasma display apparatus, a plasma display system, and a control method for a pair of shutter glasses for the plasma display apparatus.

### REFERENCE MARKS IN THE DRAWINGS

- 10: Panel
- 21: Front substrate
- 22: Scan electrode
- 23: Sustain electrode
- 24: Display electrode pair
- 25, 33: Dielectric layer
- 26: Protective layer
- 31: Rear substrate
- 32: Data electrode
- 34: Barrier rib
- 35: Phosphor layer
- 40: Plasma display apparatus
- 41: Image signal processing circuit
- 42: Data electrode driver circuit
- 43: Scan electrode driver circuit
- 44: Sustain electrode driver circuit
- 45: Timing generation circuit
- 46: Timing signal output part
- 50: Pair of shutter glasses
- 52R: Right eye shutter
- 52L: Left eye shutter

## Claims

1. A plasma display apparatus comprising:
a plasma display panel having a plurality of discharge cells, each of the discharge cells having a display electrode pair formed of a scan electrode and a sustain electrode;
a driver circuit for displaying an image on the plasma display panel in a manner such that a field for a right eye where the plasma display panel is driven based on an image signal for the right eye and a field for a left eye where the plasma display panel is driven based on an image signal for the left eye are alternately repeated, and for driving the plasma display panel in a manner such that each of the field for the right eye and the field for the left eye is formed of an all-cell initializing subfield and a selective initializing subfield, and a top subfield of each field is the all-cell initializing subfield, the all-cell initializing subfield having an all-cell initializing period where an all-cell initializing operation for causing an initializing discharge in the discharge cells is performed, an address period, and a sustain period, the selective initializing subfield having a selective initializing period where a selective initializing operation for causing the initializing discharge only in the discharge cells having undergone a sustain discharge in the sustain period of an immediately preceding subfield is performed, the address period, and the sustain period; and
a timing generation circuit for generating a timing signal for controlling the driver circuit, and shutter opening/closing timing signals, the shutter opening/closing timing signals including a timing signal for opening/closing a right eye shutter that is set to ON in response to the field for the right eye and to OFF in response to the field for the left eye, and a timing signal for opening/closing a left eye shutter that is set to ON in response to the field for the left eye and to OFF in response to the field for the right eye,
wherein the timing generation circuit generates the shutter opening/closing timing signals such that both of the timing signal for opening/closing the right eye shutter and the timing signal for opening/closing the left eye shutter are set to OFF in the all-cell initializing period of the field for the right eye and in the all-cell initializing period of the field for the left eye.

2. A plasma display system comprising:
a plasma display apparatus including:
a plasma display panel having a plurality of discharge cells, each of the discharge cells having a display electrode pair formed of a scan electrode and a sustain electrode;
a driver circuit for displaying an image on the plasma display panel in a manner such that a field for a right eye where the plasma display panel is driven based on an image signal for the right eye and a field for a left eye where the plasma display panel is driven based on an image signal for the left eye are alternately repeated, and for driving the plasma display panel in a manner such that each of the field for the right eye and the field for the left eye is formed of an all-cell initializing subfield and a selective initializing subfield, and a top subfield of each field is the all-cell initializing subfield, the all-cell initializing subfield having an all-cell initializing period where an all-cell initializing operation for causing an initializing discharge in the discharge cells is performed, an address period, and a sustain period, the selective initializing subfield having a selective initializing period where a selective initializing operation for causing the initializing discharge only in the discharge cells having undergone a sustain discharge in the sustain period of the immediately preceding subfield is performed, the address period, and the sustain period; and
a timing generation circuit for generating a timing signal for controlling the driver circuit, and shutter opening/closing timing signals, the shutter opening/closing timing signals including a timing signal for opening/closing a right eye shutter that is set to ON in response to the field for the right eye and to OFF in response to the field for the left eye, and a timing signal for opening/closing a left eye shutter that is set to ON in response to the field for the left eye and to OFF in response to the field for the right eye; and
a pair of shutter glasses to be controlled by the shutter opening/closing timing signals generated in the timing generation circuit, the pair of shutter glasses including a right eye shutter for transmitting visible light when the timing signal for opening/closing the right eye shutter is set to ON and for blocking visible light when the timing signal is set to OFF, and a left eye shutter for transmitting visible light when the timing signal for opening/closing the left eye shutter is set to ON and for blocking visible light when the timing signal is set to OFF,
wherein the timing generation circuit generates the shutter opening/closing timing signals such that both of the right eye shutter and the left eye shutter are made into a state of blocking visible light in the all-cell initializing period of the field for the right eye and in the all-cell initializing period of the field for the left eye.

3. A control method for a pair of shutter glasses for a plasma display apparatus,
the pair of shutter glasses being used to view an image displayed on the plasma display apparatus, and having a right eye shutter and a left eye shutter that can be opened and closed independently,
the plasma display apparatus including:
a plasma display panel having a plurality of discharge cells, each of the discharge cells having a display electrode pair formed of a scan electrode and a sustain electrode;
a driver circuit for displaying an image on the plasma display panel in a manner such that a field for a right eye where the plasma display panel is driven based on an image signal for the right eye and a field for a left eye where the plasma display panel is driven based on an image signal for the left eye are alternately repeated, and for driving the plasma display panel in a manner such that each of the field for the right eye and the field for the left eye is formed of an all-cell initializing subfield and a selective initializing subfield, and a top subfield of each field is the all-cell initializing subfield, the all-cell initializing subfield having an all-cell initializing period where an all-cell initializing operation for causing an initializing discharge in the discharge cells is performed, an address period, and a sustain period, the selective initializing subfield having a selective initializing period where a selective initializing operation for causing the initializing discharge only in the discharge cells having undergone a sustain discharge in the sustain period of the immediately preceding subfield is performed, the address period, and the sustain period; and
a timing generation circuit for generating a timing signal for controlling the driver circuit, and shutter opening/closing timing signals, the shutter opening/closing timing signals including a timing signal for opening/closing the right eye shutter that is set to ON in response to the field for the right eye and to OFF in response to the field for the left eye, and a timing signal for opening/closing the left eye shutter that is set to ON in response to the field for the left eye and to OFF in response to the field for the right eye,
the control method comprising:
in the all-cell initializing period of the field for the right eye and in the all-cell initializing period of the field for the left eye, making both of the right eye shutter and the left eye shutter in a state of blocking visible light.
